# DEMANDE DE BREVET EUROPEEN

(11) **EP 2 879 328 A1**
(43) Date de publication de la demande: **03.06.2015**
(21) Numéro de dépôt: 14195211.9
(22) Date de dépôt: 27.11.2014
(51) Int. Cl.: H04L 12/18

(54) **Procédé et serveur de réservation de ressources matérielles de conférence**

(30) Priorité: 29.11.2013 FR 1361894
(71) Demandeur: Orange, 75015 Paris (FR)
(72) Inventeur: Noisette, Yoann, 14320 MAY SUR ORNE (FR)
(74) Mandataire: Delumeau, François Guy

(57) **Abrégé**

Le procédé de réservation selon l'invention comprend :
- une étape de réception (E100) d'un message d'invitation à une conférence en provenance d'un dispositif associé à l'organisateur de la conférence, ce message d'invitation identifiant au moins un participant distinct de l'organisateur ;
- une étape de recherche (E200) pour le ou les participant(s) identifié(s) dans le message d'invitation, de ressources matérielles de conférence adaptées à cette conférence et au(x) participant(s);
- une étape de réservation (E300) pour ce(s) participant(s) de(s) ressource(s) matérielle(s) identifiée(s) le cas échéant lors de l'étape de recherche ; et
- une étape d'émission (E400) d'un message de notification à destination du dispositif du ou des participant(s) indiquant les ressources matérielles réservées.

## Description

### Arrière-plan de l'invention

L'invention se rapporte au domaine général des télécommunications. Elle concerne plus précisément les services de conférence. Une conférence est par exemple une visioconférence ou une audioconférence.

Les services de visioconférence présentent de nombreux avantages pour les entreprises et pour les particuliers. Ils offrent une alternative intéressante aux réunions en présentiel notamment en termes de coûts et de temps, en permettant en particulier de limiter les déplacements physiques des participants.

Si de plus en plus de services de visioconférence offrent la possibilité d'utiliser des terminaux personnels et/ou mobiles (téléphones intelligents ou « smartphones », tablettes, etc.), force est de constater, en particulier dans un contexte professionnel, que l'utilisation de salles de visioconférence dédiées restent la solution la plus couramment utilisée. Ces installations spécialement équipées à cet effet remplacent avantageusement les réunions physiques tout en préservant le confort et l'expérience des utilisateurs. Ainsi, dans les salles dites « immersives », équipées de grands écrans et de dispositifs sonores de haute qualité, les participants ont l'impression d'être tous localisés physiquement dans la même salle.

Pour autant, l'organisation d'une visioconférence reste une opération laborieuse en termes d'expérience utilisateur. L'organisateur d'une visioconférence doit en effet dans un premier temps inviter les différents participants, puis s'assurer de la réservation de salles de visioconférence pour ces différents participants en fonction de leur localisation géographique. Chacune de ces étapes peut éventuellement être facilitée par l'utilisation de moyens informatiques dédiés, tels que par exemple le courrier électronique pour envoyer l'invitation à la visioconférence ou un portail de réservation pour l'attribution des salles de visioconférence. Il n'en reste pas moins que l'organisation ainsi mise en place reste compliquée pour l'utilisateur.

### Objet et résumé de l'invention

La présente invention permet notamment de pallier l'inconvénient précité en proposant un procédé de réservation destiné à être mis en oeuvre par un serveur de réservation de ressources matérielles de conférence comprenant :
- une étape de réception d'un message d'invitation à une conférence en provenance d'un dispositif d'un organisateur de la conférence, ce message d'invitation identifiant au moins un participant distinct de l'organisateur de la conférence ;
- une étape de recherche pour ledit au moins un participant identifié dans le message d'invitation, d'une ressource matérielle de conférence adaptée à la conférence et audit participant ;
- une étape de réservation pour ledit au moins un participant de la ressource matérielle identifiée le cas échéant lors de l'étape de recherche ; et
- une étape d'émission d'un premier message de notification à destination d'un dispositif dudit au moins un participant indiquant la ressource matérielle réservée pour ce participant.

Corrélativement, l'invention vise également, selon un deuxième aspect, un serveur de réservation de ressources matérielles de conférence comprenant :
- un module de réception d'un message d'invitation à une conférence en provenance d'un dispositif d'un organisateur de la conférence, ce message d'invitation identifiant au moins un participant distinct de l'organisateur de la conférence ;
- un module de recherche pour ledit au moins un participant identifié dans le message d'invitation, d'une ressource matérielle de conférence adaptée à la conférence et au participant;
- un module de réservation de la ressource matérielle identifiée le cas échéant pour ledit au moins un participant ; et
- un module d'émission d'un message de notification à destination d'un dispositif dudit au moins un participant indiquant la ressource matérielle réservée pour ce participant.

Corrélativement, l'invention vise encore, selon un troisième aspect, un procédé de demande de réservation, par un dispositif d'un organisateur d'une conférence, de ressources matérielles de conférence comprenant une étape d'émission d'un message d'invitation à la conférence à un serveur de réservation, le message d'invitation identifiant au moins un participant distinct de l'organisateur de la conférence.

Corrélativement, l'invention vise aussi, selon un quatrième aspect, un procédé de réception d'une invitation à une conférence par un dispositif d'au moins un participant comprenant une étape de réception d'un message de notification en provenance d'un serveur de réservation indiquant une ressource matérielle réservée par le serveur pour le participant, cette ressource matérielle étant adaptée à la conférence et au participant.

Au sens de l'invention, on entend par « ressources matérielles de conférence » toutes ressources matérielles permettant la participation, d'une ou plusieurs personnes, à une conférence, et en particulier des salles de conférence prévues à cet effet et intégrant le matériel nécessaire à la tenue d'une conférence, comme par exemple des écrans, des caméras et des haut-parleurs. De telles ressources matérielles peuvent être caractérisées par leurs équipements matériels, leur capacité, leur disponibilité et leur localisation géographique.

L'invention facilite ainsi l'expérience utilisateur de l'organisateur d'une conférence en confiant la tâche de la réservation des ressources matérielles nécessaires aux participants de cette conférence à un serveur de réservation dédié à cet effet et activé sur réception d'un message d'invitation émis par l'organisateur de la conférence. L'organisateur n'a ainsi qu'à envoyer une invitation à la conférence identifiant les participants et à destination des dispositifs des participants sans se soucier de la réservation des ressources matérielles nécessaires à la tenue de celle-ci. Cette réservation de ressources matérielles est menée par le serveur de réservation de manière transparente ou quasi transparente pour l'organisateur.

Il est à noter que l'organisateur peut aussi être un participant à la conférence. Dans ce cas, le serveur de réservation procède de la même façon que pour les autres participants et effectue la réservation de la ressource matérielle nécessaire à l'organisateur. En d'autres termes le procédé de réservation effectue également les étapes de recherche, de réservation et d'émission pour l'organisateur de la conférence.

En variante, l'organisateur peut ne pas participer à la conférence mais organiser celle-ci par exemple pour le compte d'un participant (c'est par exemple le cas d'une assistante de direction organisant la conférence pour le compte d'un tiers). Dans ce cas, le serveur de réservation n'effectue pas de réservation pour le compte de l'organisateur.

Cette solution, particulièrement simple et efficace, est en adéquation avec la volonté souvent affichée aujourd'hui de la plupart des utilisateurs de disposer d'outils unifiés de communication leur permettant en une seule opération d'organiser une conférence.

Le message d'invitation est émis à partir d'un dispositif associé à l'organisateur de la conférence. Il peut par exemple être rédigé à partir d'un compte associé à l'organisateur et accessible via son dispositif, comme par exemple un compte de messagerie, un compte informatique ou encore un compte utilisateur. Au sens de l'invention, l'envoi d'un message à un dispositif d'un tiers (organisateur ou participant à la conférence) inclut l'envoi d'un message à un tel compte accessible par le dispositif de l'utilisateur. La rédaction peut selon les cas être effectuée en utilisant par exemple un portail applicatif dédié ou une application de messagerie électronique classique munie d'un ajout applicatif (en anglais « plug-in » ou « add-on »).

Conformément à l'invention, lors de sa transmission à destination des dispositifs des participants, le message d'invitation transite par le serveur de réservation de ressources matérielles. A partir de ce message d'invitation, le serveur de réservation de ressources obtient la liste des participants invités à la conférence et identifie pour chacun de ces participants des ressources matérielles de conférence adaptées. Par ressources matérielles adaptées, on entend ici une ressource matérielle qui est disponible au moment de la conférence et qui répond aux besoins identifiés du participant.

Pour déterminer une ressource matérielle adaptée à la conférence et aux participants, le serveur de réservation peut notamment prendre en compte, lors de l'étape de recherche, différents types d'information telle que la localisation géographique du participant au moment de la conférence. Ainsi, de façon avantageuse, un participant qui au moment où doit se tenir la conférence se trouve en déplacement, peut se voir proposer par le serveur de réservation une ressource matérielle située sur le lieu ou à proximité du lieu de son déplacement. En variante, d'autres informations peuvent être prises en compte pour déterminer une ressource matérielle de conférence adaptée, par exemple la présence d'équipements particuliers, etc.

A partir de ces informations, le procédé de réservation identifie, en fonction des participants, les ressources matérielles de conférence adéquates. Lors de cette étape de recherche, et sous réserve que les informations pertinentes soient disponibles, le serveur de ressources matérielles est à même de choisir des ressources matérielles de conférence adaptées, par exemple en termes de capacité, en fonction du nombre de participants présents physiquement sur chaque site.

En cas de succès de cette étape de recherche, les ressources matérielles identifiées sont réservées et un premier message de notification est envoyé, par exemple par courrier électronique, au dispositif de chacun des participants concernés pour l'informer de la ressource matérielle qui lui a été attribuée. L'identification et la réservation des ressources matérielles adaptées sont ainsi réalisées également de façon transparente pour les participants à la conférence.

Dans un mode particulier de réalisation de l'invention, le premier message de notification est inclus dans le message d'invitation reçu en provenance du dispositif de l'organisateur avant d'être émis à destination du dispositif du participant concerné.

L'invention permet ainsi de personnaliser l'invitation émise à destination du dispositif de chaque participant.

Dans un mode particulier de réalisation de l'invention, le procédé de réservation comprend, en cas d'échec de l'étape de recherche pour au moins un participant identifié dans le message d'invitation, une étape d'émission d'un deuxième message de notification de cet échec à destination du dispositif de ce participant et/ou du dispositif de l'organisateur de la conférence.

De cette façon, sur réception de ce deuxième message de notification indiquant une indisponibilité de ressources matérielles de conférence pour un participant, l'organisateur peut modifier sa demande initiale d'organisation afin de tenir compte de cet échec (par exemple : modification du jour ou de l'heure de la conférence). L'organisateur peut ainsi, de façon transparente pour le participant concerné, modifier sa demande d'organisation en vue de permettre l'attribution d'une ressource matérielle à ce participant.

De façon similaire, lorsque le participant est informé de l'échec de la réservation, il peut néanmoins décider d'y participer, en dépit de l'absence de ressources matérielles, en utilisant par exemple un terminal personnel.

Dans un autre mode particulier de réalisation de l'invention, le procédé de réservation comprend également une étape d'émission d'un troisième message de notification à destination du dispositif de l'organisateur de la conférence et indiquant la ressource matérielle réservée pour ledit au moins un participant identifié dans le message d'invitation.

De façon avantageuse, l'organisateur est ainsi informé du déroulement du procédé de réservation de ressources matérielles. L'organisateur sait ainsi qu'une ressource matérielle a été réservée pour le participant concerné et qu'il n'est en conséquence pas nécessaire de modifier la demande d'organisation pour ce participant.

D'autre part, lorsqu'une ressource matérielle a été attribuée à chaque participant, l'organisateur a ainsi la confirmation que la conférence peut effectivement avoir lieu.

Dans un mode particulier de réalisation de l'invention, le procédé de réservation comprend également :
- une étape de modification d'une ressource matérielle réservée pour au moins un participant en fonction d'au moins une information extraite d'un message reçu en provenance d'un dispositif d'au moins un participant identifié dans le message d'invitation et/ou en provenance du dispositif de l'organisateur de la conférence ; et
- une étape d'émission d'un quatrième message de notification de cette modification à destination du dispositif dudit au moins un participant pour lequel la réservation de ladite au moins une ressource matérielle a été modifiée.

Le serveur de réservation de ressources matérielles peut ainsi entreprendre si nécessaire, à partir des retours des participants, des actions correctives visant à améliorer l'attribution et la réservation des ressources matérielles de conférence. Le serveur de réservation peut par exemple adapter le choix des ressources matérielles en fonction du nombre de participants ayant répondu favorablement à l'invitation, ou encore proposer une nouvelle ressource matérielle à un participant ayant répondu qu'il souhaitait participer mais qui a fourni des informations complémentaires sur sa localisation lors de la conférence.

Dans un mode de réalisation particulier de l'invention, lorsqu'une nouvelle ressource matérielle est réservée lors de l'étape de modification, le quatrième message de notification de la modification indique la nouvelle ressource matérielle réservée.

En variante, le message de notification indiquant la nouvelle ressource matérielle réservée peut également être inclus dans le message d'invitation avant d'être émis à destination du dispositif du participant concerné.

Dans un autre mode de réalisation de l'invention, l'étape de recherche du procédé de réservation comprend, pour au moins un participant identifié dans le message d'invitation :
- une étape d'envoi à un serveur distant sélectionné pour ce participant d'une requête de réservation d'une ressource matérielle de conférence adaptée à la conférence et à ce participant ; et
- une étape de réception d'un message de réponse du serveur distant à la requête, indiquant le cas échéant la ressource matérielle de conférence réservée pour le participant.

En d'autres termes, il peut arriver que le serveur de réservation de ressources matérielles n'ait pas accès directement à la liste des ressources matérielles qui peuvent être mises à disposition d'un participant. C'est par exemple le cas, lorsque ce participant n'est pas un utilisateur connu du serveur de réservation de ressources. Une telle situation peut se produite notamment lorsque l'organisateur dont dépend le serveur de réservation et le participant sont localisées sur des sites géographiques différents, appartenant notamment à des entreprises différentes, ou encore lorsque organisateur et participant sont des usagers d'opérateurs différents de systèmes de conférence.

Dans cette situation, et de façon avantageuse, le serveur de réservation de ressources matérielles a la possibilité, à partir d'informations sur le participant incluses dans le message d'invitation, telles que l'identifiant du participant, d'identifier un serveur distant associé au participant et accessible via un réseau de télécommunications. A partir de cet identifiant, le serveur de réservation peut déterminer l'adresse du serveur distant auquel est associé le participant en utilisant par exemple une table de correspondance entre l'identifiant du participant et par exemple l'adresse Internet du serveur distant. Le serveur de réservation peut ensuite interroger le serveur distant associé au participant. Le serveur distant, s'il a connaissance de ressources matérielles pouvant être attribuées au participant, envoie au serveur de réservation de ressources un message de réponse indiquant la ressource matérielle réservée pour le participant et le serveur de réservation de ressources la notifie ensuite au dispositif du participant.

De façon alternative, si aucun serveur distant ne peut être identifié, le serveur de réservation de ressources peut proposer au participant d'utiliser un terminal personnel ou encore d'utiliser une ressource matérielle réservée pour un autre participant. Le choix d'une telle solution alternative peut être prédéterminé, en fonction par exemple d'une politique de gestion du service de conférence voulue par l'organisateur ou le cas échéant par l'opérateur de ce service.

Dans un autre mode de réalisation particulier de l'invention, le serveur de réservation, sur réception d'un message de réponse au message d'invitation en provenance d'un dispositif d'au moins un participant, transfère ce message de réponse au dispositif de l'organisateur de la conférence. Celui-ci est ainsi informé du déroulé de l'organisation de la conférence.

Dans un mode particulier de réalisation, les différentes étapes du procédé de réservation, du procédé de demande de réservation et du procédé de réception d'une invitation à une conférence sont déterminées par des instructions de programmes d'ordinateurs. En conséquence, l'invention vise aussi des programmes d'ordinateur sur des supports d'informations, ces programmes étant susceptibles d'être mis en oeuvre dans un terminal, dans un serveur de réservation de ressources, dans un serveur de conférence ou plus généralement dans un ordinateur, ces programmes comportant des instructions adaptées à la mise en oeuvre des étapes d'un procédé de réservation, d'un procédé de demande de réservation ou d'un procédé de réception d'une invitation à une conférence tels que décrits ci-dessus.

Ce programme peut utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un système de conférence comprenant :
- un premier dispositif d'un organisateur d'une conférence apte à émettre un message d'invitation à une conférence identifiant au moins un participant à cette conférence ;
- au moins un deuxième dispositif dudit au moins un participant ; et
- un serveur de réservation de ressources matérielles de conférence selon l'invention apte, sur réception du message d'invitation, à attribuer au moins une ressource matérielle de conférence audit au moins un participant.

Dans un mode de réalisation particulier, le système de conférence comprend en outre un serveur distant associé à un participant identifié dans le message d'invitation et dans lequel :
- le module de recherche du serveur de réservation de ressources matérielles est apte à envoyer à ce serveur distant une requête de réservation d'une ressource matérielle de conférence adaptée à la conférence et à ce participant ; et
- le serveur distant est apte à envoyer au serveur de réservation de ressources matérielles un message de réponse à cette requête indiquant une ressource matérielle de conférence réservée pour le participant.

Le système de conférence bénéficie des mêmes avantages, cités précédemment, que le procédé et le serveur de réservation.

On peut également envisager, dans d'autres modes de réalisation, que le procédé de réservation, le serveur de réservation de ressources et le système selon l'invention présentent en combinaison tout ou partie des caractéristiques précitées.

### Brève description des dessins

Des caractéristiques et avantages particuliers de la présente invention ressortiront de la description détaillée faite aux figures dans lesquelles :
- la figure 1 représente un système de visioconférence conforme à l'invention dans un mode particulier de réservation ;
- la figure 2 illustre un exemple d'architecture matérielle d'un serveur de réservation de ressources selon l'invention ; et
- la figure 3 représente, sous forme d'ordinogramme, les principales étapes d'un procédé de réservation de ressources matérielles de visioconférence conforme à l'invention dans une variante d'implémentation.

### Description détaillée de l'invention

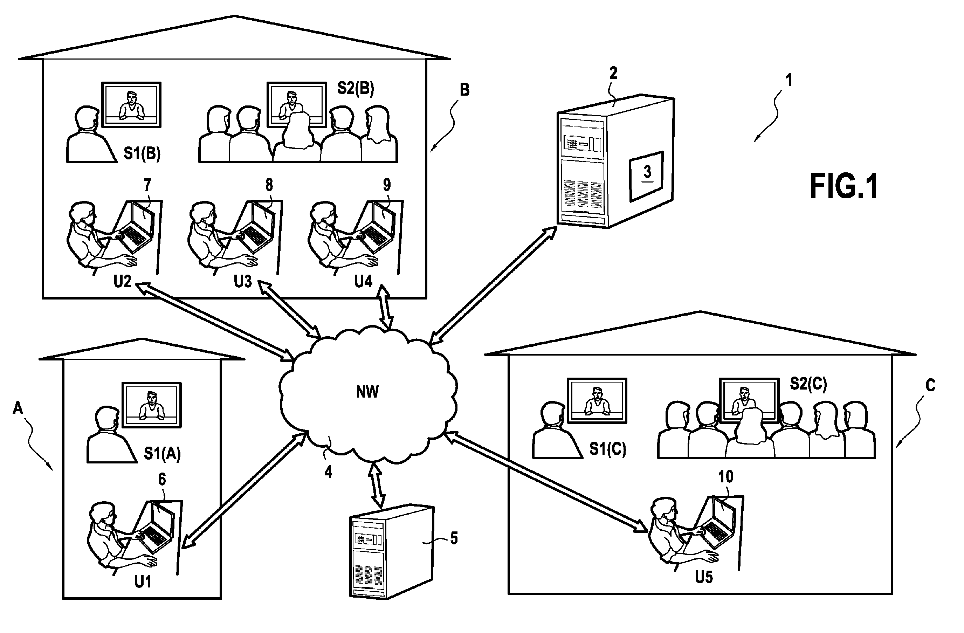

La **figure 1** représente, dans son environnement, un système de visioconférence 1 conforme à l'invention, dans un mode particulier de réalisation.

Dans l'exemple envisagé à la figure 1, le système de visioconférence 1 permet à un utilisateur U1 localisé sur un site géographique A d'organiser, via un serveur de visioconférence 2, une visioconférence avec des utilisateurs U2, U3, U4 et U5. Les utilisateurs U2, U3 et U4 sont ici hébergés sur un deuxième site géographique B tandis que l'utilisateurU5 est localisé sur un troisième site géographique C.

Conformément à l'invention, le système 1 gère l'attribution de ressources matérielles de visioconférence pour l'ensemble des participants à la visioconférence organisée par l'utilisateur U1 (autrement dit des utilisateurs U1 à U5).

Dans l'exemple décrit ici, l'organisateur U1 de la visioconférence est aussi un participant à la visioconférence.

En variante, l'organisateur U1 peut ne pas être un participant à la visioconférence. Dans ce cas, il n'y a pas de réservation de ressource matérielle pour l'organisateur U1.

Dans le mode de réalisation décrit ici, les ressources matérielles attribuées par le système 1 sont des salles de visioconférence, équipées à cet effet. Bien entendu, d'autres types de ressources matérielles de visioconférence peuvent être envisagés (ex. un terminal équipé d'un logiciel permettant d'accéder à un service de visioconférence, un écran, une caméra et/ou des haut-parleurs, etc.).

Ainsi, dans l'exemple envisagé à la figure 1, on suppose que chacun des sites géographiques A, B et C dispose d'une ou de plusieurs salles de visioconférence reliées entre elles via un réseau de télécommunications 4.

Par exemple, à titre illustratif :
- le site A est équipé d'une salle de visioconférence S1(A),
- le site B est équipé de deux salles de visioconférence S1(B) et S2(B), et
- le site C est également équipé de deux salles de visioconférence S1(C) et S2(C).

Les salles de visioconférence S1(A), S1(B) et S1(C) disposent en outre ici d'une capacité d'accueil d'une personne, tandis que la salle de visioconférence S2(B), respectivement S2(C), dispose d'une capacité de cinq personnes, respectivement six personnes.

Aucune limitation n'est attachée bien entendu au nombre de ressources matérielles disponibles pour chacun des sites géographiques, ni à la nature du réseau de télécommunications 4. Le réseau de télécommunications 4 peut ainsi être un réseau mobile (ex. UMTS (Universal Mobile Télécommunications System)) ou fixe (ex. Ethernet), filaire ou sans fil (ex : WLAN (Wireless Local Area Network)), privé ou public, etc.

En outre, les salles de visioconférence envisagées peuvent être indifféremment des salles dédiées classiques, des salles immersives ou encore des salles de réunion équipées d'un ordinateur personnel destiné à être utilisé pour des applications de visioconférence, etc. Aucune limitation n'est attachée à la nature de ces salles dès lors qu'elles sont équipées de moyens matériels de visioconférence et connectées entre elles par exemple via un ou plusieurs réseau(x) de télécommunications 4.

Conformément à l'invention, le système de visioconférence 1 comprend :
- un premier dispositif 6 associé à l'organisateur U1 de la visioconférence ;
- une pluralité de dispositifs 7, 8, 9 et 10 associés respectivement à chacun des utilisateurs U2, U3, U4 et U5 invités à participer à la visioconférence organisée par l'utilisateur U1 ; et
- un serveur de réservation de ressources matérielles 3 conforme à l'invention, qui gère à proprement parler l'attribution de ressources matérielles de visioconférence aux utilisateurs U1-U5, adaptées d'une part à la visioconférence organisée par l'utilisateur U1, et d'autre part à chacun des utilisateurs U1-U5.

Il convient de noter que le serveur de réservation de ressources matérielles 3 n'a pas nécessairement accès directement aux ressources matérielles, autrement dit, il ne peut pas nécessairement réserver lui-même ces ressources pour le compte des utilisateurs U1 à U5, mais peut être amené à communiquer avec un serveur tiers (par exemple un serveur distant accessible via le réseau de télécommunications 4) pour effectuer cette réservation. Ainsi, dans l'exemple illustré à la figure 1, on suppose que le serveur de réservation 3 a accès aux ressources matérielles S1(A), S1(B) et S2(B), mais que les ressources matérielles S1(C) et S2(C) sont gérées par un serveur distant 5.

Dans le mode de réalisation décrit ici, les dispositifs des utilisateurs U1 à U5 sont des terminaux, tels que par exemple des ordinateurs fixes ou portables, équipés d'un logiciel de messagerie électronique muni d'un ajout applicatif permettant à leurs utilisateurs respectifs d'accéder au serveur de réservation 3 via un compte utilisateur tel que par exemple un compte de messagerie électronique auquel est rattaché le serveur de réservation. Un tel logiciel de messagerie électronique est connu en soi et n'est pas décrit plus en détail ici.

A titre d'alternative, seul le terminal 6 de l'organisateur Ulest équipé d'un logiciel de messagerie électronique muni d'un logiciel applicatif et les terminaux 7, 8, 9 et 10 des autres participants (U2-U5) sont équipés d'un logiciel de messagerie classique.

En variante, les dispositifs des utilisateurs U1 à U5 sont équipés d'un logiciel d'accès, connu en soi, à un portail applicatif dédié ou à une messagerie en ligne, tel que par exemple un navigateur Web.

Dans le mode particulier de réalisation décrit ici, le serveur de réservation de ressources 3 est intégré dans le serveur de visioconférence 2. Ainsi, le serveur de visioconférence 2 se distingue d'un serveur de visioconférence connu en ce qu'il comprend un serveur de réservation de ressources conforme à l'invention.

En variante, le serveur de réservation de ressources matérielles 3 peut être localisé sur un dispositif matériel ou logiciel indépendant du serveur de visioconférence 2.

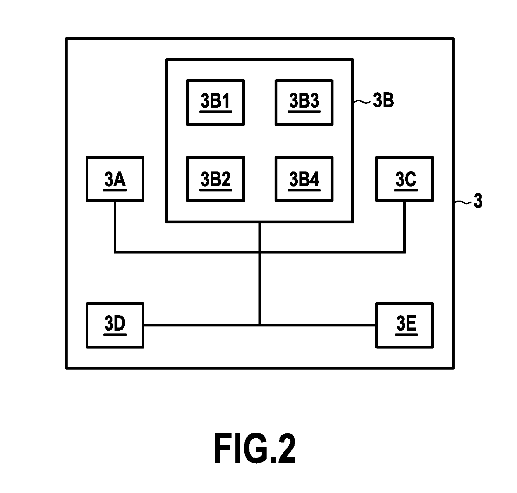

Le serveur de réservation dispose ici de l'architecture matérielle d'un ordinateur, telle qu'illustrée schématiquement à la **figure 2**.

Il comporte notamment un processeur 3A, une mémoire morte 3B, une mémoire vive 3C, une mémoire non volatile 3D et des moyens de communication 3E sur le réseau de télécommunications 4. Le processeur 3A, les mémoires 3B-3D et les moyens de communication 3E peuvent éventuellement être partagés avec des moyens correspondants du serveur de visioconférence 2.

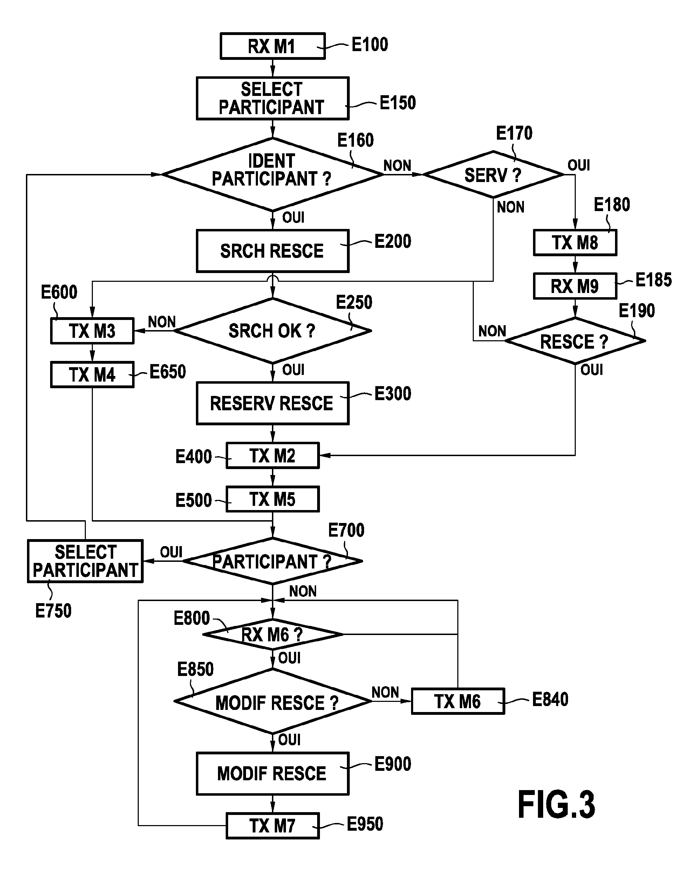

La mémoire morte 3B du serveur de réservation de ressources matérielles constitue un support d'enregistrement lisible par le processeur 3A et sur lequel est enregistré un programme d'ordinateur conforme à l'invention, comportant des instructions pour l'exécution des étapes d'un procédé de réservation conforme à l'invention, les étapes de ce procédé de réservation étant décrites ultérieurement en référence à la figure 3, dans un mode particulier de réalisation.

Ce programme d'ordinateur définit de façon équivalente des modules (logiciels) fonctionnels du serveur de réservation de ressources matérielles 3, tels que notamment un module de réception 3B1 d'un message d'invitation à une visioconférence en provenance d'un dispositif d'un utilisateur et identifiant au moins un participant à cette visioconférence, un module de recherche 3B2 de ressources matérielles adaptées à la visioconférence et aux participants, un module de réservation 3B3 de ces ressources matérielles et un module de d'émission 3B4 de messages de notification à destination des dispositifs des participants à la visioconférence. Le module fonctionnel de réception 3B1 et le module fonctionnel d'émission 3B4 utilisent notamment les moyens de communication 3E du serveur de réservation 3. Leurs fonctions sont décrites plus en détail maintenant en référence aux étapes du procédé de réservation illustrées à la figure 3.

La **figure 3** représente les principales étapes d'un procédé de réservation de ressources matérielles selon l'invention dans un mode particulier de réalisation dans lequel il est mis en oeuvre par le serveur de réservation de ressources matérielles 3.

On suppose que l'utilisateur U1 rédige, à partir de son terminal 6, un message M1 d'invitation à une visioconférence à destination des utilisateurs U2, U3, U4 et U5. Ce message d'invitation M1 est rédigé ici à partir d'un compte de messagerie électronique associé à l'organisateur U1, et accessible via son terminal.

Le message d'invitation M1 prend ainsi ici la forme connue en soi d'un courrier électronique. Il comprend les identifiants de chaque participant invité à la visioconférence, à savoir ici, des utilisateurs U2, U3, U4 et U5. Ces identifiants sont par exemple des adresses de messagerie électroniques auxquelles le message d'invitation M1 peut être transmis.

Le message d'invitation M1 est reçu par le serveur de réservation de ressources matérielles 3, à l'aide de son module de réception 3B1, au cours d'une étape E100. A cet effet, le message d'invitation M1, bien que destiné aux terminaux 7, 8, 9 et 10 des utilisateurs U2 à U5, peut être envoyé directement par le terminal 6 au serveur de réservation 3 (via par exemple une configuration appropriée du compte de messagerie associé à l'utilisateur U1 via lequel est envoyé ce message d'invitation), ou en variante le serveur de réservation 3 peut être placé en coupure de flux des messages émis par les dispositifs des utilisateurs U1 à U5 relatifs à l'organisation et/ou à la participation à des visioconférences.

Sur réception du message M1, le serveur de réservation 3 identifie lors d'une étape E150 un premier participant à la visioconférence. Ce participant peut être l'organisateur U1 de la visioconférence, émetteur via son dispositif 6 du message M1 s'il participe à la visioconférence ; ou un participant à la visioconférence identifié dans le message d'invitation M1, tel que par exemple le participant U2. On suppose ici que le participant sélectionné est le participant U2.

Le serveur de réservation 3 détermine ensuite, au cours d'une étape E160, s'il a accès directement à la liste des ressources matérielles pouvant être mises à disposition du participant U2 sélectionné.

Dans le mode de réalisation décrit ici, l'attribution d'une salle de visioconférence à un participant est réalisée par le serveur de réservation 3 en tenant compte de la localisation géographique de ce participant.

S'il n'a pas accès à cette liste (réponse non à l'étape E160), le serveur de réservation 3 cherche à identifier, à partir d'informations sur le participant U2 contenues dans le message d'invitation M1, un serveur distant 5 (i.e. accessible au travers d'un réseau de télécommunications) associé au participant U2 et ayant accès aux ressources matérielles de visioconférence mises à la disposition du participant U2.

L'identification du serveur distant 5 se fait ici en utilisant l'adresse de messagerie électronique du participant U2 contenue dans le message M1. A partir de cette adresse électronique, le serveur de réservation détermine l'adresse du serveur distant 5 auquel est associé le participant U2 en utilisant par exemple une table de correspondance entre le nom de domaine de l'adresse de messagerie du participant U2 et l'adresse Internet du serveur distant 5.

Puis au cours d'une étape E180, le serveur de réservation 3 envoie au serveur distant 5 une requête de réservation M8 d'une ressource matérielle de visioconférence adaptée à la visioconférence proposée par l'utilisateur U1 et au participant U2. Par adaptée, on entend ici une ressource matérielle, et plus particulièrement une salle de visioconférence, qui est disponible aux horaires prévus de la visioconférence et localisée géographiquement sur le site sur lequel se trouve le participant U2.

Sur réception d'un message M9 (étape E185) de réponse du serveur distant 5 identifiant une telle ressource matérielle de visioconférence réservée pour le participant U2, le serveur de réservation 3 notifie par un premier message de notification M2, via son module d'émission 3B4, au cours d'une étape E400, le participant U2 de la salle de visioconférence qui lui a été réservée.

Si aucune salle n'a pu être réservée (réponse non à l'étape E190) par le serveur distant 5, le serveur de réservation 3 envoie un message de notification M3 au dispositif 7 du participant U2 et un message de notification M4 au dispositif 6 de l'organisateur U1 pour les informer de cet échec, lors des étapes E600 et E650. Les messages de notification M3 et M4 sont des deuxièmes messages de notification au sens de l'invention.

En variante, le serveur de réservation 3 envoie un message de notification M3 seulement au dispositif 7 du participant U2.

Dans une autre variante, le serveur de réservation 3 envoie un message de notification M4 seulement au dispositif 6 de l'organisateur U1.

Si le participant U2 fait partie des utilisateurs pour lesquels le serveur de réservation 3 a accès à la liste des salles de visioconférence pouvant être mises à disposition de ces utilisateurs (réponse oui à l'étape E160), celui-ci recherche alors, via notamment son module de recherche 3B2, s'il existe une salle de visioconférence qui soit simultanément adaptée à la visioconférence organisée par l'utilisateur U1 (en particulier en terme de disponibilité aux horaires correspondants) et à l'utilisateur U2, et notamment ici à sa localisation géographique lors de la visioconférence.

Pour ce faire, le serveur de réservation de ressources matérielles 3 identifie, par exemple grâce à l'annuaire d'entreprise (en anglais « Active Directory »), au carnet d'adresses du participant U2, à l'agenda électronique du participant U2 ou par tout autre moyen, la localisation géographique du participant U2 au moment de la visioconférence.

De la même façon, le serveur de réservation 3 obtient la même information pour les autres utilisateurs U1, U3, U4 et U5. Si la localisation géographique d'un participant au moment de la visioconférence ne peut être déterminée, par exemple lorsque le serveur de réservation 3 n'a pas accès à l'agenda électronique de ce participant, alors le site habituel (i.e. défini par défaut) de présence de ce participant est sélectionné.

En fonction de la localisation de U2 au moment de la visioconférence, et en particulier des ressources matérielles disponibles et du nombre de participants identifiés comme présents dans cette localisation, le serveur de réservation de ressources matérielles 3 détermine, au cours d'une étape E200, une salle de visioconférence adaptée à l'utilisateur U2.

On suppose ici que la salle de visioconférence S2(B) est sélectionnée car le serveur de réservation 3 a identifié la présence du participant U2 sur le site B au moment de la visioconférence ainsi que la présence, sur ce même site, de deux autres participants U3 et U4 invités à la visioconférence.

La ressource matérielle S2(B) ayant été déterminée (réponse oui à l'étape E250), la salle de visioconférence S2(B) est réservée par le serveur de réservation 3 au cours d'une étape E300 via son module de réservation 3B33. Le serveur de réservation 3 notifie ensuite, au cours d'une étape E400, le participant U2 de la ressource matérielle qui a été réservée pour lui au moyen d'un premier message de notification M2 envoyé au dispositif 7 du participant U2 déterminé par son identifiant, par exemple son adresse de messagerie électronique, présent dans le message d'invitation M1. Lorsque le participant est aussi l'organisateur de la visioconférence, on suppose que son identifiant est présent également dans le message d'invitation M1, soit comme participant soit comme l'émetteur du message d'invitation.

Le premier message de notification M2 peut être envoyé au dispositif du participant U2 de manière indépendante du message d'invitation M1. Il peut également être intégré dans le message d'invitation M1 avant que celui-ci soit transmis au dispositif du participant U2. Dans ce dernier cas, le message d'invitation M1 incluant le premier message de notification M2 devient un message d'invitation à la visioconférence personnalisé pour le participant U2.

Dans le mode de réalisation décrit ici, le serveur de réservation de ressources matérielles 3 envoie également un message de notification M5 (étape E500) au dispositif de l'organisateur U1 ; ce message est un troisième message au sens de l'invention et indique les ressources matérielles réservées pour le participant U2.

Dans le mode de réalisation décrit ici, en cas d'échec de la recherche d'une salle de conférence adaptée à l'utilisateur U2 et à la visioconférence (réponse non à l'étape E250), le serveur de réservation 3 envoie un message de notification M3 au dispositif du participant U2 au cours d'une étape E600. Puis, lors de l'étape E650, le serveur de réservation 3 envoie également un message de notification M4 au dispositif de l'organisateur U1. Les messages M3 et M4 qui sont des deuxièmes messages de notification au sens de l'invention permettent d'informer l'organisateur U1 et le participant U2 de l'échec de la recherche d'une ressource matérielle adaptée à la visioconférence et à l'utilisateur U2.

En variante, le serveur de réservation 3 envoie un message de notification M3 seulement au dispositif 7 du participant U2.

Dans une autre variante, le serveur de réservation 3 envoie un message de notification M4 seulement au dispositif 6 de l'organisateur U1.

Dans un autre mode de réalisation de l'invention, le deuxième message de notification M3 contient en outre une invitation à se connecter à distance à la visioconférence si le service le permet ou encore une liste de ressources matérielles affectées à d'autres participants que le participant U2 peut également choisir d'utiliser.

Si il reste des participants à la visioconférence (organisateur ou autre) pour lesquels la recherche d'une ressource matérielle n'a pas encore été faite (réponse oui à l'étape E700), le serveur de réservation 3 identifie un nouveau participant (éventuellement l'organisateur) lors d'une étape E750 et réitère les étapes E160 à E700.

Dans le mode de réalisation décrit ici, les étapes E160 à E600 sont réalisées séquentiellement pour chacun des participants invités à la visioconférence identifiés dans le message d'invitation M1, ainsi que le cas échéant pour l'organisateur U1. En variante, les étapes E160 à E600 peuvent être réalisées, simultanément pour chaque participant (U1-U5), en parallèle.

Dans le mode de réalisation décrit ici, après avoir recherché et attribué en cas de succès une ressource matérielle de visioconférence à chaque participant (U1-U5) invité à la visioconférence et identifié dans le message d'invitation M1, le serveur de réservation 3 met en oeuvre une nouvelle phase au cours de laquelle il est susceptible de faire évoluer les réservations de ressources matérielles effectuées sur la base de retours des participants sur l'invitation émise par l'organisateur U1 ou sur les réservations effectuées par le serveur de réservation 3.

Un participant peut en particulier, à titre d'exemple et de façon non limitative, informer par un message M6, le serveur de réservation 3 qu'il ne participera pas à la visioconférence ou qu'il y participera à partir d'un terminal personnel ou encore qu'il souhaite participer à cette visioconférence à partir d'un autre site géographique que celui qui héberge la salle de visioconférence qui lui a été proposée par le serveur de réservation 3.

De son côté, l'organisateur peut également décider de modifier l'invitation initiale, par exemple en modifiant l'horaire de la visioconférence ou les participants invités (ex. ajout/retrait de participants).

Dans le mode de réalisation considéré ici, le serveur de réservation 3, sur réception d'un message M6 (étape E800) en provenance d'un dispositif d'un participant identifié dans le message d'invitation M1 et/ou en provenance d'un dispositif de l'organisateur de la visioconférence U1, peut adapter la réservation des ressources matérielles précédemment effectuée.

Lors d'une étape E850, le serveur de réservation de ressources matérielles 3 détermine, au moins à partir des informations contenues dans le message d'invitation M1 et dans le message M6, si la réservation d'une ressource matérielle doit être modifiée.

Lorsque une modification de la réservation d'une ressource matérielle est requise (réponse oui à l'étape E850), le serveur de réservation 3 met à jour, lors d'une étape E900, la réservation des ressources matérielles en conséquence, puis notifie le ou les dispositif(s) du ou des participant(s) concernés de la modification effectuée en leur envoyant (étape E950) un quatrième message de notification M7.

Si aucune mise à jour de la réservation des ressources matérielles n'est nécessaire (réponse non à l'étape E850), le serveur de réservation de ressources transfère (étape E840) le message M6 de réponse du participant à l'organisateur de la visioconférence afin que celui-ci soit informé de l'évolution du procédé de réservation.

Dans le mode de réalisation décrit ici, l'invention a été décrite dans le cadre de l'organisation d'une visioconférence nécessitant la réservation de ressources matérielles adaptées à cette visioconférence. Il est à noter que l'invention s'applique également à l'organisation d'une audioconférence de manière identique ou similaire.

## Revendications

1. Procédé de réservation par un serveur de réservation de ressources matérielles de conférence comprenant :
- une étape de réception (E100) d'un message d'invitation (M1) à une conférence en provenance d'un dispositif associé à un organisateur (U1) de la conférence, ledit message d'invitation (M1) identifiant au moins un participant (U2) distinct de l'organisateur de ladite conférence ;
- une étape de recherche (E200) pour ledit au moins un participant (U2) identifié dans le message d'invitation (M1), d'une ressource matérielle de conférence adaptée (S2(B)) à ladite conférence et audit participant (U2);
- une étape de réservation (E300) pour ledit au moins un participant (U2) de la ressource matérielle identifiée (S2(B)) le cas échéant lors de l'étape de recherche ; et
- une étape d'émission (E400) d'un premier message de notification (M2) à destination d'un dispositif dudit au moins un participant indiquant ladite ressource matérielle réservée (S2(B)) pour ce participant (U2).

2. Procédé selon la revendication 1 dans lequel lesdites étapes de recherche, de réservation et d'émission sont également effectuées pour ledit organisateur (U1) de la conférence.

3. Procédé selon l'une quelconque des revendications 1 à 2 dans lequel le premier message de notification (M2) est inclus dans le message d'invitation reçu (M1) en provenance du dispositif de l'organisateur (U1) avant d'être émis à destination du dispositif dudit au moins un participant (U2).

4. Procédé selon l'une quelconque des revendications 1 à 3 comprenant, en cas d'échec de ladite étape de recherche (E200) pour au moins un participant (U2) identifié dans le message d'invitation (M1), une étape d'émission (E600, E650) d'un deuxième message (M3,M4) de notification de cet échec à destination du dispositif de ce participant (U2) et/ou du dispositif de l'organisateur (U1) de la conférence.

5. Procédé selon l'une quelconque des revendications 1 à 3 comprenant en outre une étape d'émission (E500) d'un troisième message (M5) de notification à destination du dispositif de l'organisateur (U1) de la conférence indiquant la ressource matérielle réservée pour ledit au moins un participant (U2).

6. Procédé selon l'une quelconque des revendications 1 à 5 comprenant :
- une étape de modification d'une réservation d'une ressource matérielle pour au moins un participant en fonction d'au moins une information extraite d'un message (M6) reçu en provenance d'un dispositif d'au moins un participant identifié dans le message d'invitation et/ou en provenance du dispositif de l'organisateur de la conférence ; et
- une étape d'émission d'un quatrième message (M7) de notification de cette modification à destination du dispositif dudit au moins un participant pour lequel la réservation de ladite au moins une ressource matérielle a été modifiée.

7. Procédé selon la revendication 6 dans lequel, lorsqu'une nouvelle ressource matérielle est réservée lors de l'étape de modification, le quatrième message (M7) de notification de la modification indique la nouvelle ressource matérielle réservée.

8. Procédé selon l'une quelconque des revendications 1 à 7 dans lequel l'étape de recherche (E200) comprend, pour au moins un participant identifié dans le message d'invitation :
- une étape d'envoi à un serveur distant (5) sélectionné pour ce participant d'une requête (M8) de réservation d'une ressource matérielle de conférence adaptée à ladite conférence et à ce participant ; et
- une étape de réception d'un message (M9) de réponse du serveur distant (5) à ladite requête (M8), indiquant le cas échéant la ressource matérielle de conférence réservée pour le participant.

9. Procédé selon l'une quelconque des revendications 1 à 8 dans lequel l'étape de recherche prend en compte une localisation géographique dudit au moins un participant lors de ladite conférence.

10. Procédé selon l'une quelconque des revendications 1 à 9 comprenant en outre :
- une étape de réception d'un message de réponse au message d'invitation en provenance d'un dispositif d'au moins un participant ; et
- une étape de transfert de ce message de réponse au dispositif de l'organisateur de la conférence.

11. Serveur de réservation de ressources matérielles (3) de conférence comprenant :
- un module de réception (3B1) d'un message d'invitation (M1) à une conférence en provenance d'un dispositif d'un organisateur (U1) de la conférence, ledit message d'invitation (M1) identifiant au moins un participant (U2) distinct de l'organisateur de ladite conférence ;
- un module de recherche (3B2) pour ledit au moins un participant (U2) identifié dans le message d'invitation (M1), d'une ressource matérielle de conférence (S2(B)) adaptée à ladite conférence et audit participant (U2);
- un module de réservation (3B3) de la ressource matérielle (S2(B)) identifiée le cas échéant pour ledit au moins un participant (U2) ; et
- un module d'émission (3B4) d'un message de notification (M2) à destination d'un dispositif dudit au moins un participant (U2) indiquant ladite ressource matérielle réservée (S2(B)) pour ce participant.

12. Système de conférence (1) comprenant :
- un premier dispositif d'un organisateur (U1) d'une conférence apte à émettre un message d'invitation (M1) à ladite conférence identifiant au moins un participant (U2) à ladite conférence;
- au moins un deuxième dispositif dudit au moins un participant (U2) ; et
- un serveur de réservation (3) de ressources matérielles de conférence selon la revendication 13 apte, sur réception du message d'invitation (M1), à attribuer au moins une ressource matérielle de conférence (S2(B)) audit au moins un participant (U2).

13. Système de conférence (1) selon la revendication 12 comprenant en outre un serveur distant (5) associé à un participant (U2) identifié dans le message d'invitation et dans lequel :
- le module de recherche (3B2) du serveur de réservation de ressources matérielles (3) est apte à envoyer à ce serveur distant (5) une requête de réservation d'une ressource matérielle de conférence adaptée à ladite conférence et à ce participant (U2) ; et
- le serveur distant (5) est apte à envoyer au serveur de réservation de ressources matérielles (3) un message de réponse à cette requête indiquant une ressource matérielle de conférence réservée pour le participant (U2).

14. Procédé de demande de réservation, par un dispositif d'un organisateur (U1) d'une conférence, de ressources matérielles de conférence comprenant une étape d'émission d'un message d'invitation (M1) à ladite conférence à un serveur de réservation, ledit message d'invitation (M1) identifiant au moins un participant (U2) distinct de l'organisateur de ladite conférence.

15. Procédé selon la revendication 14 comprenant une étape de réception d'un message de notification (M2, M5, M3, M4) en provenance dudit serveur de réservation, ledit message indiquant une ressource matérielle (S2(B)) de conférence réservée par ledit serveur pour cet organisateur (U1) et/ou pour ledit au moins un participant (U2) identifié dans le message d'invitation (M1) ou un échec de recherche d'une ressource matérielle de conférence pour cet organisateur (U1) et/ou pour ledit au moins un participant (U2) identifié dans le message d'invitation (M1), ladite ressource matérielle (S2(B)) étant adaptée à ladite conférence et audit au moins un participant (U2) et/ou audit organisateur (U1).

16. Procédé de réception d'une invitation à une conférence par un dispositif d'au moins un participant (U2) comprenant une étape de réception d'un message de notification (M2) en provenance d'un serveur de réservation indiquant une ressource matérielle (S2(B)) réservée par ledit serveur pour ledit au moins un participant (U2), ladite ressource matérielle (S2(B)) étant adaptée à ladite conférence et audit au moins un participant (U2).

17. Programme d'ordinateur comportant des instructions pour l'exécution des étapes du procédé de réservation selon l'une quelconque des revendications 1 à 10, du procédé de demande de réservation selon la revendication 14 ou 15 ou du procédé de réception d'une invitation à une conférence selon la revendication 16 lorsque ledit programme est exécuté par ordinateur.

18. Support d'enregistrement lisible par un ordinateur sur lequel est enregistré un programme d'ordinateur comprenant des instructions pour l'exécution des étapes du procédé de réservation selon l'une quelconque des revendications 1 à 10, du procédé de demande de réservation selon la revendication 14 ou 15 ou du procédé de réception d'une invitation à une conférence selon la revendication 16.
